# EUROPEAN PATENT APPLICATION

(11) **EP 4 664 049 A1**
(43) Date of publication of application: **17.12.2025**
(21) Application number: 24386070.7
(22) Date of filing: 10.06.2024
(51) Int. Cl.: F28F 1/08

(54) **HEAT EXCHANGER**

(71) Applicant: Hieta Technologies Limited, Ansty Business Park Coventry CV7 9JU (GB)
(72) Inventor: Kapsis, Marios, Coventry, CV7 9JU (GB)
(74) Representative: D Young & Co LLP

(57) **Abstract**

A heat exchanger has fluid flow channels with at least one heat exchanging surface which has an undulating surface section extending along at least part of a length of the channel and at least one flat surface section. For each undulating surface section, along a first edge of the undulating surface section aligned with a predetermined direction, a profile of the heat exchanging surface varies according to a first transverse wave with a direction of travel corresponding to the predetermined direction, and along a second edge of the undulating surface section aligned with the predetermined direction, a profile of the heat exchanging surface varies according to a second transverse wave with a direction of travel corresponding to the predetermined direction. Each flat surface section is flat along a direction of travel corresponding to the predetermined direction. One of the flat surface sections is lying either between one of the undulating surface sections and a side wall of the at least one fluid flow channel, or between a first undulating surface section and a second undulating surface section of the at least one heat exchanging surface.

## Description

### TECHNICAL FIELD

The present invention relates to a heat exchanger, a system and a method of manufacturing a heat exchanger.

### BACKGROUND

A heat exchanger may include a number of fluid flow channels through which fluid can flow so that heat may be exchanged by the fluid in respective channels of the heat exchanger. Heat exchangers can be useful for a range of applications, for example as a recuperator for recovering heat from exhaust gas from an internal combustion engine or gas turbine, or in other applications such as power generation or ventilation systems.

### SUMMARY

At least examples provide a heat exchanger comprising a plurality of fluid flow channels, at least one of the fluid flow channels comprising at least one heat exchanging surface comprising at least one undulating surface section extending along at least part of a length of the channel and at least one flat surface section. For each undulating surface section, along a first edge of the undulating surface section aligned with a predetermined direction, a profile of the heat exchanging surface varies according to a first transverse wave with a direction of travel corresponding to the predetermined direction, and along a second edge of the undulating surface section aligned with the predetermined direction, a profile of the heat exchanging surface varies according to a second transverse wave with a direction of travel corresponding to the predetermined direction. For each flat surface section is flat along a direction of travel corresponding to the predetermined direction, and where one of the flat surface sections is lying either between one of the undulating surface sections and a side wall of the at least one fluid flow channel, or between a first undulating surface section and a second undulating surface section of the at least one heat exchanging surface.

At least some examples provide a method of manufacturing a heat exchanger comprising forming a plurality of fluid flow channels, at least one of the fluid flow channels comprising at least one heat exchanging surface comprising at least one undulating surface section extending along at least part of a length of the channel and at least one flat surface section. For each undulating surface section, along a first edge of the undulating surface section aligned with a predetermined direction, a profile of the heat exchanging surface varies according to a first transverse wave with a direction of travel corresponding to the predetermined direction, and along a second edge of the undulating surface section aligned with the predetermined direction, a profile of the heat exchanging surface varies according to a second transverse wave with a direction of travel corresponding to the predetermined direction. For each flat surface section is flat along a direction of travel corresponding to the predetermined direction, and where one of the flat surface sections is lying either between one of the undulating surface sections and a side wall of the at least one fluid flow channel, or between a first undulating surface section and a second undulating surface section of the at least one heat exchanging surface.

At least examples provide a system comprising a combustor to generate heat by combusting a fuel, and a recuperator to recover heat from the exhaust gas output by the combustor, where the recuperator comprises of the heat exchanger as discussed above.

At least some examples provide a computer-readable data structure representing a design of a heat exchanger as discussed above. The data structure may be stored on the storage medium. The storage medium may be a non-transitory storage medium.

### BRIEF DESCRIPTION OF DRAWINGS

Further aspects, features and advantages of the present technique will be apparent from the following description of examples, which is to be read in conjunction with the accompanying drawings, in which:
Figure 1 schematically illustrates an example of a heat exchanger used as a recuperator in a combined heat and power (CHP) system;
Figure 2 shows an example of a heat exchanger comprising fluid flow channels;
Figure 3 shows an example of a heat exchanging surface for one of the fluid flow channels of the heat exchanger, which comprises an undulating surface section;
Figure 4 shows a side view of the undulating surface section of the heat exchanging surface;
Figure 5 shows an example where internal fins which internally sub-divide a heat exchanging channel comprise an undulating surface section;
Figures 6A and 6B show examples of heat exchanger surfaces that have both undulating surface sections and flat surface sections;
Figure 7 shows a further example of a heat exchanger surface that has both undulating surface sections and flat surface sections;
Figure 8 shows an example of a heat exchanger surface that has a void between the undulating surface sections;
Figures 9A and 9B show heat transfer coefficient diagrams obtained by a computational fluid dynamics (CFD) simulation of fluid flow through a channel having a heat exchanging surface with an undulating surface section as shown in Figure 7, with the heat exchanging surface in Figure 9A not comprising the flat surface sections and the heat exchanging surface in Figure 9B comprising the flat surface sections as shown in Figure 7
Figures 10A and 10B show velocity streamline diagrams obtained by a computational fluid dynamics (CFD) simulation of fluid flow through a channel having a heat exchanging surface with an undulating surface section as shown in Figure 7, with the heat exchanging surface in Figure 10A not comprising the flat surface sections and the heat exchanging surface in Figure 10B comprising the flat surface sections as shown in Figure 7;
Figure 11 illustrates one example of manufacturing equipment for manufacturing the heat exchanger by additive manufacture; and
Figure 12 is a flow diagram illustrating a method of manufacturing a heat exchanger.

### DETAILED DESCRIPTION

A heat exchanger has a number of fluid flow channels. Fluid can flow through the channels and exchange heat with fluid flowing through neighbouring channels. In some examples, the heat exchanger may comprise alternating channels for flow of the first and the second fluid so that the first and second fluids may exchange heat. However, there may be tendency for fluid flowing through a given channel to stick to the walls of the channel so that there may not be a significant amount of mixing between the fluid adjacent to the walls of the channel and fluid at the centre of the channel further from the walls. This can reduce the effectiveness of the heat exchanger as there is less opportunity for the fluid in the centre of the channel to exchange heat through the boundaries of the channel with the fluid in neighbouring channels.

In the heat exchanger described below, at least one of the fluid flow channels includes at least one heat exchanging surface which has at least one undulating surface section extending along at least part of a length of the channel and at least one flat surface section. For each undulating surface section, along a first edge of the undulating surface section aligned with a predetermined direction, a profile of the heat exchanging surface varies according to a first transverse wave with a direction of travel corresponding to a predetermined direction, and along a second edge of the undulating surface section aligned with the predetermined direction, a profile of the heat exchanging surface varies according to a second transverse wave with a direction of travel corresponding to the predetermined direction. Each flat surface section is flat along a direction of travel corresponding to the predetermined direction, and one of the flat surface sections is lying either between one of the undulating surface sections and a side wall of the at least one fluid flow channel, or between a first undulating surface section and a second undulating surface section of the at least one heat exchanging surface.

Hence, the undulating surface section has a wavy surface profile and the flat surface section has a flat profile such that the at least one heat exchanging surface has a combination of a flat surface section and an undulating surface section. This combination of surface profiles enhances the heat transfer. The undulating surface section enhances heat transfer because the flow passes over concave surfaces of valleys in the undulating surface to form rotating vortices, which generate local zones of flow separation and re-attachment. In contrast, the flat surface profile proximate to the side wall reduces the friction loss that occurs near the side wall, where flow acceleration may be observed due to boundary layer growth. Equally, providing a flat surface section proximate to the side wall increases the structural integrity of the heat exchanger as the joint between the heat exchanger surface and the side wall is simpler and stronger. The flat surface profile between a first undulating surface section and a second undulating surface section of the at least one heat exchanging surface mitigates flow separation, thereby providing a more evenly distributed flow field. While making a surface with a combination of an undulating surface section and a flat surface section can be challenging using conventional means such as casting or moulding, by using additive manufacture it is possible to manufacture intricately patterned surfaces. Hence, a heat exchanger with at least one channel having the undulating surface section and flat surface section as discussed above provides better heat exchange properties, and is practical to manufacture.

In some examples, the at least one heat exchanger surface comprises a secondary surface of the heat exchanger. As set out below, secondary surfaces divide different portions of the hot channel or different portions of the cold channel from one another. The internal sub divisions within a hot channel or within a cold channel by the secondary surfaces provides additional surfaces through which heat can be conducted, thereby further improving the heat transfer.

In some examples, the at least one heat exchanging surface comprises the first undulating surface section and the second undulating surface section, with the first edge of the first undulating surface section adjacent to the second edge of the second undulating surface section. This not only also multiple undulating surface sections to be provided, but also allows the geometry or form of the undulating surface sections to differ, allowing the undulating surface sections to be tailored to the flow characteristics in the section of the heat exchanging surface where they are located.

In some examples, a first flat surface section is lying or otherwise provided between the first undulating surface section and the second undulating surface section and a second flat surface section is lying or otherwise provided between either the first undulating surface section and a first side wall of the at least one fluid flow channel or the second undulating surface section and a second side wall of the at least one fluid flow channel, wherein the second side wall is opposite the first side wall. Additionally, a third flat surface section can be provided. In this example, the second flat surface section lies or is otherwise located between the first undulating surface section and the first side wall of the at least one fluid flow channel, and the third flat surface section lies or is otherwise located between the second undulating surface section and the second side wall of the at least one fluid flow channel. This creates a geometry within the heat exchanging surface where flat portions are provided at both side walls of the heat exchanging surface, as well as in between the first undulating surface section and the second undulating surface section. It has been found that the heat transfer benefit provided by the undulating surface sections is minimal at the side walls, due to the turbulence and boundary layer effects of the side walls on the fluid flow in this region. Providing a flat surface proximate to the side walls results in less flow acceleration and makes the heat exchanging surface easier to manufacture. Equally, where two or more undulating surface sections are provided which have a different geometry or wave form, additional turbulence and flow disruption is created at the interface between the two first undulating surface sections. By providing a flat portion between the undulating surface sections, this effect is minimised and the heat transfer benefit of the undulating surface sections is maximised. Further, a smooth transition can be provided at each of the interfaces between the flat surface sections and the undulating surface sections in order to minimise the flow disruption at these interfaces. For example, the undulating surface section can taper into the flat surface section in order to provide a smooth transition between the surface sections.

In some examples, rather than a flat surface section between the first and second undulating surface sections, a void of material is provided between the first undulating surface section and the second undulating surface section. In other words, a flat surface section is provided between at least one of the first undulating surface section and a first side wall of the at least one fluid flow channel or the second undulating surface section and a second side wall of the at least one fluid flow channel, and there is an absence of material between the first undulating surface section and the second undulating surface section. This void of material may comprise one or more holes, slots or other form of cut-out between the first undulating surface section and the second undulating surface section in order to create one or more regions where fluid can pass from one side of the heat exchanging surface to the other (in other words, through the heat exchanging surface). In this case, the surface section between the first undulating surface section and the second undulating surface section that contains the void can have a flat surface profile (in other words, a flat surface section. Alternatively, the void of material can extend along an entire length of the first edge of the first undulating surface section and the second edge of the second undulating surface section, such that the first undulating surface section and the second undulating surface section are not connected to each other.

In some examples, the first transverse wave and the second transverse wave of the first undulating surface section and the second undulating surface section have the same amplitude and frequency. As set out above, each of the first undulating surface section and the second undulating surface section comprises a first transverse wave and the second transverse wave. In this example, the first transverse wave and the second transverse wave of the first undulating surface section and the first transverse wave and the second transverse wave of the second undulating surface section all have the same amplitude and frequency. A number of different waveforms could be used, but particularly useful waveforms may include a sinusoidal wave or a triangle wave. Sinusoidal or triangle waves are useful they avoid sharp changes in level which makes it easier to manufacture the undulating surface section through additive manufacturing techniques (as additive manufacture may impose a limitation that it is not possible for an upper layer to be built on a lower layer of material if the upper layer overhangs by more than a certain threshold angle). Nevertheless, other waveforms could also be used. The waveforms of the transverse waves need not be regular, e.g. they could be superposition of a set of harmonics or components. For example in some cases the may include waveforms which have the period from one peak to the next trough different to the period from one trough to the next peak, or which have multiple peaks/troughs per cycle at irregular intervals within the cycle.

In some examples, the first transverse wave of the first undulating surface section and the second transverse wave of the second undulating surface section have a first phase and the second transverse wave of the first undulating surface section and the first transverse wave of the second undulating surface section have a second phase, wherein the first and second phase a different. As set out above, the first transverse wave of the first undulating surface section is located along the first edge of the first undulating surface section, the second transverse wave of the second undulating surface section is located along the second edge of the second undulating surface section. As the first edge of the first undulating surface section is adjacent to the second edge of the second undulating surface section, the amplitude, frequency and phase of the waves on the first undulating surface section and the second undulating surface section at this located are the same, and therefore the wave forms at the location where the first and second undulating surface sections are adjacent to one another is the same. This minimises the flow disturbance in this region, since the adjacent undulating surfaces have the same profile. In contrast, the opposite edges of the first and second undulating surface sections (i.e. the second edge of the first undulating surface section and the first edge of the second undulating surface section) have a different phase, but the same phase as each other. This results in the first and second undulating surface sections having mirrored surface profiles about the location where the first and second undulating surface sections are adjacent to each other. In some further examples, the first phase and the second phase are such that a peak on the first edge of the first undulating surface section is located further along the direction of travel corresponding to the predetermined direction than the corresponding peak on the second edge of the first undulating surface section. In other words, the lines of peaks or ridges created in the first undulating surface section are angled to the predetermined direction, with each peak on the second edge of the first undulating surface section (i.e. the edge opposite the edge proximate the second undulating surface section) is located a shorter distance along the direction of travel than the peak on the first edge of the first undulating surface section located on the same ridge. By virtue of the properties of the transverse waves set out above, this also means that the each peak on the first edge of the second undulating surface section (i.e. the edge opposite the edge proximate the first undulating surface section) is located a shorter distance along the direction of travel than the peak on the second edge of the second undulating surface section located on the same ridge. This creates "fish-bone" type profile to the first and second undulating surface sections, where the ridges on the first and second undulating surfaces follow the same profile along the predetermined direction, but mirrored about the about the location where the first and second undulating surface sections are adjacent to each other. This could also be considered a chevron shaped profile but without the apex of the chevron being present.

The at least one heat exchanging surface may have a substantially constant thickness in the at least one undulating surface section. Hence, even though the surface profile of the undulating surface section varies in the wave pattern discussed above, the thickness still remains the same (within bounds of manufacturing tolerance) regardless of the point of the wave at which are given point on the surfaces located. This can be useful for ensuring a consistent thermal conductance across the undulating surface so that the wave like surface of the heat exchanger surface provided to promote fluid mixing does not compromise the ability to conduct heat through the walls of the channel. A substantially constant thickness also provides greater structural integrity to the heat exchanging surface and

In some cases, the undulating heat exchanging surface may comprise the wall of the fluid flow channel in which the heat exchanging surface is provided. Alternatively, the heat exchanging surface could be an internal fin which partially sub-divides a given fluid flow channel. The internal fins need not pass along the entire length of the heat exchanging channel. Instead the internal fin may extend along less than a full length of the heat exchanging channel in the predetermined direction. If multiple fins are provided then these could be placed at offset locations along the length of the channel, with gaps in-between. In some cases the lateral positions of the internal fins in the channel in a direction orthogonal to the predetermined direction could be offset or staggered.

The predetermined direction corresponds to the direction of fluid flow of fluid through the fluid flow channels. For example the fluid flow direction may correspond to the long axis of the fluid flow channels. Note that the fluid flow channels could in some embodiments correspond to straight channels, but could also be bent or follow a tortuous path or a path bending around a turn, and so in some cases the fluid flow direction may not be straight but may follow a curved path. In this case the transverse waves and the predetermined direction may also follow the curve path. By orienting the transverse waves and the predetermined direction such that they have a direction of travel that corresponds to the fluid flow direction, this provides greater heat exchanger efficiency as this means that the fluid passing through the channels alternates across the ridges and valleys in the undulating surface section and this promotes mixing of the fluid at periodic intervals along the channel length making it less likely that a given volume of fluid remains far from any surface by which heat can be conducted to fluid in adjacent channels.

The heat exchanger may comprise of an integrated mass of consolidated material, for example made by additive manufacture. This contrasts with heat exchangers where the respective channels are manufactured from a number of separate components. Hence, the fluid flow channels, including at least one heat exchanging surface having the undulating surface section and the flat surface section, may be formed together as one entity from a single body of material.

The heat exchanger described above can be used in a range of engineering systems. However it can be particularly useful for a system comprising a combustor for generating heat by combusting a fuel and a recuperator for recovering heat from exhaust gas output by the combustor. The recuperator may comprise the heat exchanger as discussed above. Compactness can often be an important requirement for such systems. By improving the heat exchanger efficiency, the heat exchanger can often be made smaller as shorter channels may be sufficient to provide a given amount of heat exchange.

For example the heat exchanger can be formed by additive manufacture. In additive manufacture, an article may be manufactured by successively building up layer after layer of material in order to produce an entire article. For example the additive manufacture could be by selective laser melting, selective laser centring, electron beam melting, etc. The material used for the heat exchanger can vary, but in some examples may be a metal, for example aluminium, titanium or steel or could be an alloy. In some cases the heat exchanger may be formed in one single process whereby the layers making up the respective parts of the heat exchanger may be laid down successfully by additive manufacture.

The additive manufacture process may be controlled by supplying an electronic design file which represents characteristics of the design to be manufactured, and inputting the design file to a computer which translates the design file into instructions supplied to the manufacturing device. For example, the computer may slice a three-dimensional design into successive two-dimensional layers, and instructions representing each layer may be supplied to the additive manufacture machine, e.g. to control scanning of a laser across a powder bed to form the corresponding layer. Hence, in some embodiments rather than providing a physical heat exchanger, the technique could also be implemented in a computer-readable data structure (e.g. a computer automated design (CAD) file) which represents the design of a heat exchanger as discussed above. Thus, rather than selling the heat exchanger in its physical form, it may also be sold in the form of data controlling an additive manufacturing machine to form such a heat exchanger. A storage medium may be provided storing the data structure.

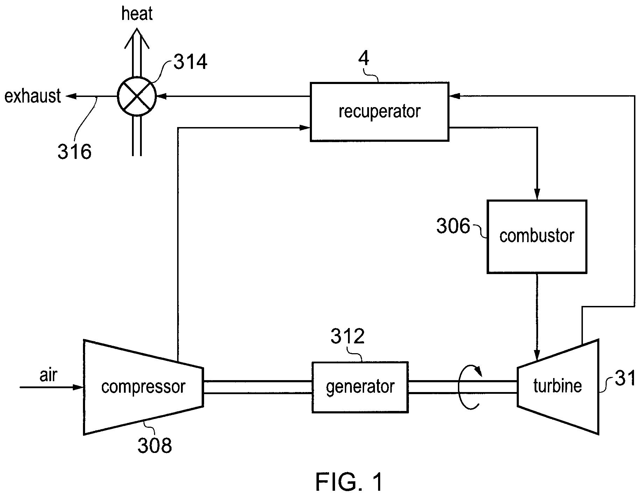

Figure 1 schematically illustrates an example of a system 2 comprising a heat exchanger 4. in this example the system 2 comprises a micro turbine engine used for combined heat and power (CHP) for home energy supply. A combustor 306 combusts a fuel (e.g. gas). The intake air for the combustor is compressed by a compressor 308 which is driven by a turbine 31 driven by the exhaust gas from the combustor 306. The turbine and compressor 308 are mounted on a common shaft together with a generator 312 which generates electrical power based on the rotation of the turbine. The electrical power can be supplied as part of the electricity supply for home.

The exhaust gas from the combustor 306 having driven the turbine 31 is passed to the recuperator 4 which comprises a heat exchanger with alternating channels for the exchange of heat between first and second fluids. The heat in the exhaust gas is used to pre-heat the compressed air intake for the combustor so that the air is at a higher temperature upon entering the combustor and so the combustion efficiency of the combustor 306 can be improved. Having passed through the recuperator 4, the exhaust gas still contains some heat which can be recovered for example to heat the domestic water supply or central heating within the home at heating element 314, and then the exhaust gas is exhausted to the outside at vent 316. The combustor intake air entering the recuperator 4 is at higher pressure than the exhaust gas from the combustor 306 and turbine 31, since the intake air has been compressed by the compressor 308 and the exhaust gas has been expanded by the turbine 31.

Of course, it will be appreciated that Figure 1 shows one use case for a heat exchanger, but the heat exchanger described above and below may also be used for many other engineering applications.

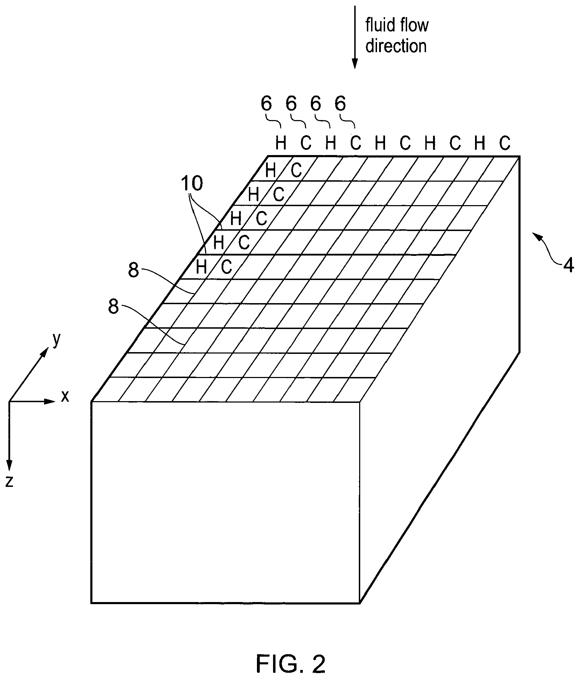

Figure 2 shows an example of the heat exchanger 4 in more detail. The heat exchanger includes a number of fluid flow channels 6 through which fluid can flow in the fluid flow direction illustrated at the top of Figure 2. A number of alternating hot and cold channels are provided for the flow of hot fluid (first fluid) and cold fluid (second fluid) respectively. For example in the system of Figure 1 the hot fluid may be the exhaust gas from the combustor 306 which has left the turbine 31 and the cold fluid may be the compressed intake air from the compressor 308 which is pre-heated using the exhaust gas heat. Manifolds are provided to distribute fluid from a hot inlet conduit or cold inlet conduit respectively, and split the fluid between the respective hot or cold channels as appropriate. The heat exchanger could be a parallel flow heat exchanger in which the hot and cold fluid flows in corresponding directions through the channels or could be a counter-flow heat exchanger in which the hot fluid flows in the opposite direction to the cold fluid.

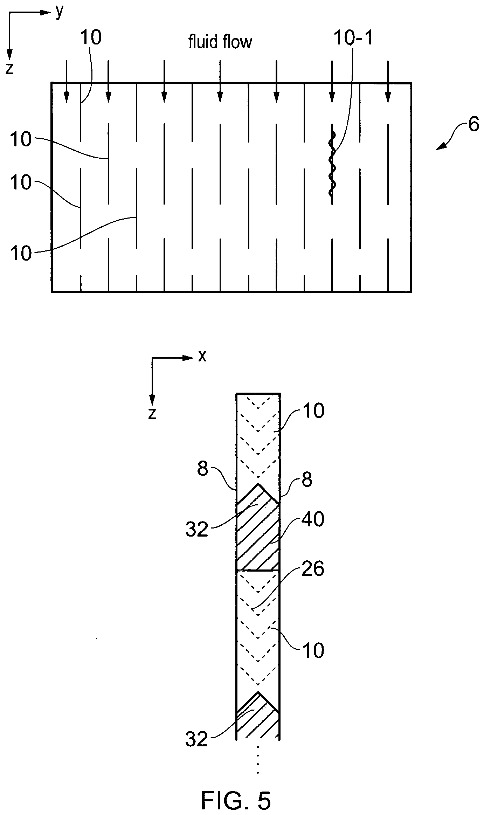

In this example the hot channels and cold channels are separated by primary channel walls 8 which extend along the Y axis shown in Figure 2. In addition, within each hot or cold channel a number of regions are internally sub divided by secondary surfaces 10 which divide different portions of the hot channel or different portions of the cold channel from one another. Although the primary mechanism of heat exchange is through the primary channel walls 8 between the hot and cold channels, the internal sub divisions within a hot channel or within a cold channel by the secondary surfaces 10 provides additional surfaces through which heat can be conducted to the primary walls 8. The secondary surfaces 10 could be further walls which extend along the full length of the fluid flow channel 6 in the fluid flow direction, or could be subdividing fins which only extend partially along less than the full length of the channel (e.g. see Figure 5 below). As described above, the at least one heat exchanger surface with the undulating and flat surface sections can be a secondary surface of the heat exchanger.

While Figure 2 shows an example where the hot channels are aligned in a column and cold channels are aligned in a column, in other examples the hot and cold channels could be staggered or interleaved in a checkerboard pattern, so that each hot channel (other than the channels at the edge of the heat exchanger) is surrounded by cold channels on each side, and vice versa.

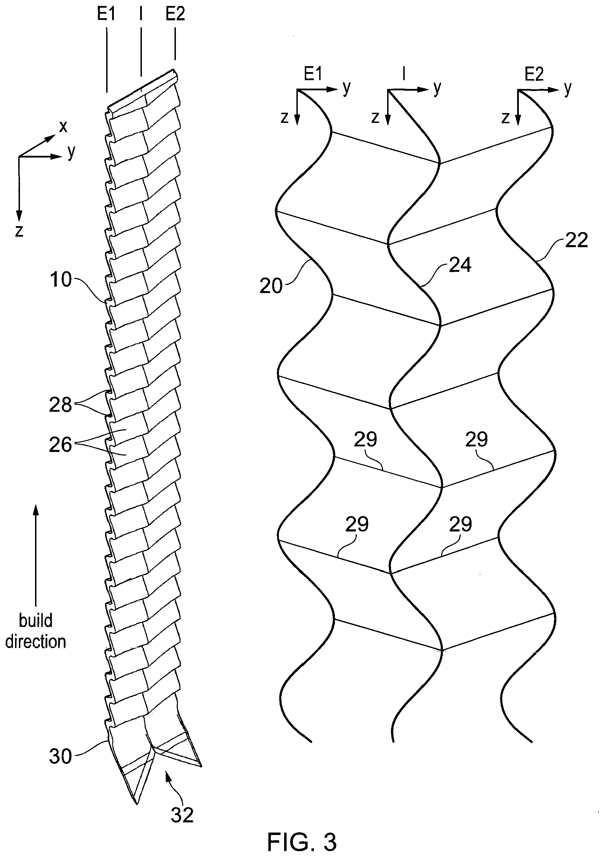

As shown in Figure 3 for at least some of the channels 6, the secondary heat exchanging surface 10 may be provided, along at least part of its length, with an undulating profile which has a surface profile which varies in a wave like pattern along a predetermined direction corresponding to the fluid flow direction (the Z axis in this example). In this context the surface profile of the surface refers to the position of the surface in the Y axis which is generally perpendicular to the X, Z plane of the surface. Hence, rather than being a flat surface, the secondary dividers 10 within channel 6 have a wiggly surface.

More particular, for each undulating section of the secondary heat exchanging surface 10, at a first edge E1 of the undulating section which is aligned with the predetermined direction (Z axis), the surface profile varies according to a first transverse wave 20 with a direction of travel corresponding to the predetermined direction. Similarly at a second edge E2 aligned with the predetermined direction, the profile varies according to a second transverse wave 22 with a direction travel that corresponds to the predetermined direction (Z axis, which in this example corresponds to the fluid flow direction). On the other hand, in some examples, at an intermediate point I which lies between the first edge E1 and the second edge E2, the surface profile of the undulating surface section varies according to a third transverse wave 24 with a direction of travel corresponding to the predetermined direction.

In this example the first and second transverse waves 20, 22 are in phase and have the same frequency and amplitude so that the Y-position (profile) of the surface is the same at both edges E1 and E2 of the undulating surface section. On the other hand, in this example the third transverse wave 24 has the same frequency and amplitude as the first and second transverse waves but a different phase relationship. As the third transverse wave 24 is out of phase with the first and second transverse waves 20, 22, the crests and troughs of the wave occur at different positions along the Z axis (predetermined direction). Note that in order to show the relationship between the first, second and third transverse waves in a two dimensional diagram, the portion shown on the right hand side of Figure 3 plots the first, second and third transverse waves side by side with E1, I and E2 arranged from left to right in the same way as the view shown in Figure 3. However, while the Y axis is shown in the right hand part of Figure 3 as extending along the plane of the page in order to enable a two dimensional representation, it will be appreciated that in reality if the view is such that E1, I and E2 are seen side by side as shown in Figure 3, the Y axis would actually extend perpendicular to the page (into or out of the page) so that the crests and troughs of the ridges and valleys would actually be going in and out of the page.

As shown in Figure 3, the effect of having the variation of the surface profile at the intermediate portion out of phase with the variation at the edges is that the surface provides a number of chevron-shaped ridges 26 and valleys 28 which point in a V-shape along the fluid flow direction in the Z axis. This can also be seen by the lines 29 joining the adjacent crest and troughs of the waves as shown in the right hand part of Figure 3. When the heat exchanger 4 is in use then this has the effect that as fluid (gas or liquid) flows through the channel, the part of the fluid which sticks nearest the heat exchanging surface 10 has to flow over the ridges and this tends to cause re-circulation of the fluid towards the centre, with other parts of the fluid which are further away from the wall taking the place of the fluid which was previously at the ridge, and hence as the fluid passes along the length of the channel this mixes the fluid and reduces the likelihood that a given volume of fluid stays far away from the heat exchanging surfaces or along the length of the channel.

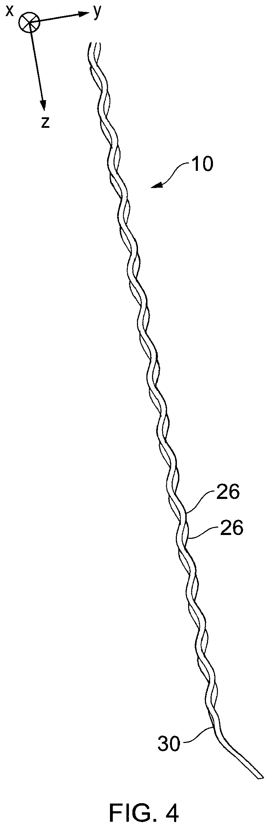

Figure 4 shows another view of the undulating surface profile of the secondary heat exchanging surface 10 when viewed along the X axis in the Z-Y plane. From the side view it is clear how the peaks of the chevron-shaped ridges 26 occur at different positions along the Z axis at the edge of the chevrons compared to the centre of the chevrons at the intermediate points I, so that they provide the chevron shapes pointing along the predetermined fluid flow direction.

As shown in Figures 3 and 4, the secondary heat exchanging surface may include a bent portion 30 at one end which may direct the fluid around a turn at an angle. This can be useful for heat exchangers where the fluid needs to exit at a conduit oriented at a different orientation to the input flow. Hence the bent portion may guide the fluid around a corner to the outlet conduit for example. As shown in Figure 3, at one end of the surface the surface may be formed with a V-shaped notch 32 extending inwards from the end of the surface. This can be useful because it allows the surface to be built by additive manufacture since it means that there is no overhang greater than a certain angle when an upper layer is built above a lower layer of material when being formed layer by layer in the additive manufacture process. Hence, the build direction for the surface can be in the opposite direction to the fluid flow direction in this particular example as illustrated in Figure 3.

As shown in Figure 5, if the fluid flow channels 6 are viewed along the Y-Z plane then the secondary dividing surfaces 10 need not to be provided along the full length of the channel 6 but could be internal fins which extend only along part of the length to subdivide regions of a hot channel 6 or cold channel 6 as required. The positions of the fins could be staggered at different portions along the Y axis. Note that each of the internal fins could have the undulating profile as shown in Figure 3 as showed for an example fin 10-1 in Figure 5. Alternatively, only some of the fins could have the undulating section and other fins could be flat. As shown at the lower part of Figure 5, when multiple fins are provided at different positions along the Z axis with a gap 40 between the fins 10, then by having the notch shape 32 at the base of each fin, this enables the fins to be made by additive manufacture since they bridge out from adjacent primary walls 8 of the channel. Since there is a V-shaped notch then the upper layers of the material being laid down need only extend beyond lower layers by a smaller angle for each successive layer until eventually they meet in the middle and then the full surface with chevron-shaped ridges 26 and valleys can be formed.

While Figure 3 shows an example where the first and second transverse waves 20, 22 are identical, this is not essential and in other examples the second transverse wave 22 could have a different phase, amplitude and/or frequency to the first transverse wave 20. In this case there may be some difference or asymmetry in the chevron shapes.

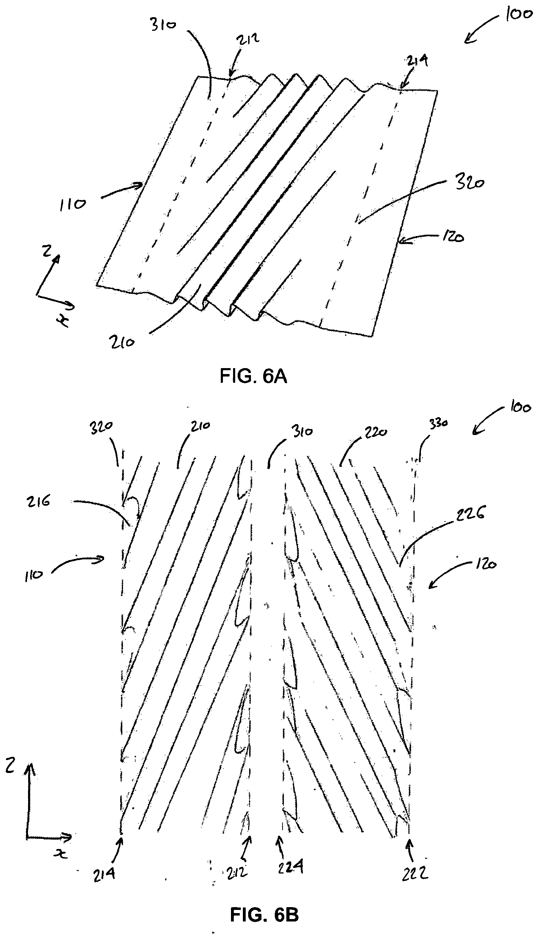

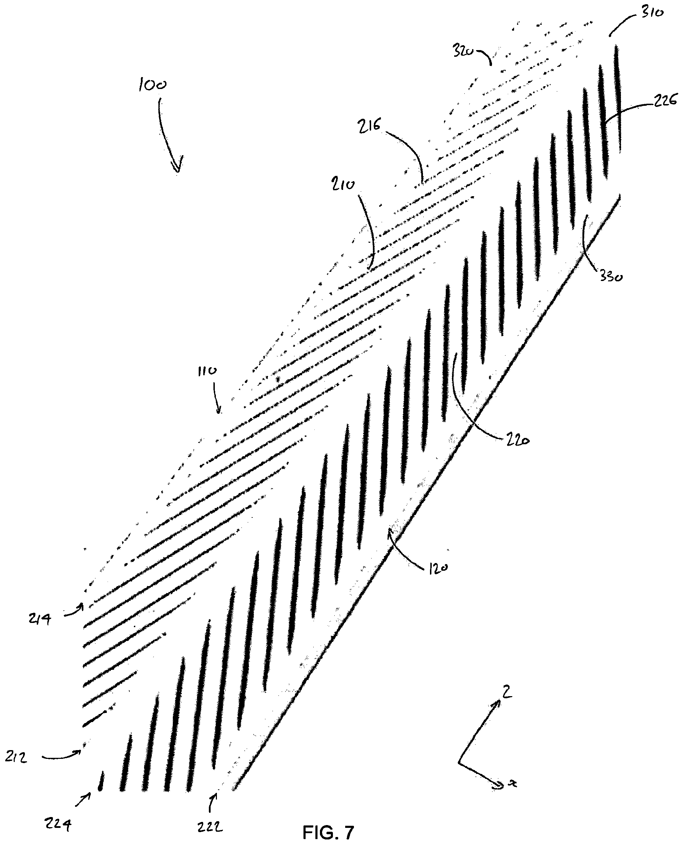

Figures 6A and 6B show example of heat exchanger surfaces 100, for example the secondary surface 10 as described above, that have both undulating surface sections and flat surface sections. Figure 7 shows a further example of a heat exchanger surface 100, for example the secondary surface 10 as described above, that has both undulating surface sections 210, 220 and flat surface sections 310, 320, 330. The heat exchanger surface 100 illustrated in Figure 6A has one undulating surface section and two flat surface sections and the heat exchanger surface 100 illustrated in Figures 6B and 7 has two undulating surface sections and three flat surface sections. It will be appreciate, however, that this is not essential and that any combination of number of undulating surface sections and flat surface sections may be provided.

As illustrated in Figures 6A, a first flat surface section 310 lies or is otherwise provided between the undulating surface section 210 and the first side wall 110 of the fluid flow channel, and a second flat surface section 320 lies or is other provided between the undulating surface section 210 and the second side wall 120 of the fluid flow channel 6. Accordingly, in this example a flat surface section is provided between each of the side walls of the heat exchanger surface 100 and the first undulating surface section 210, but it will be appreciated that only one of the flat surface sections may be provided.

As illustrated in Figures 6B and 7, a first flat surface section 310 lies or is otherwise provided between the first undulating surface section 210 and the second undulating surface section 220, a second flat surface section 320 lies or is otherwise provided between the first undulating surface section 210 and the first side wall 110 of the fluid flow channel, and a third flat surface section 330 lies or is other provided between the second undulating surface section 220 and the second side wall 120 of the fluid flow channel 6. Accordingly, in this example a flat surface section is provided at both of the side walls and along the mid span of the heat exchanger surface 100 (i.e. between the first undulating surface section 210 and the second undulating surface section 220), but it will be appreciated that only one or any combination of the flat surface sections may be provided.

As described above and shown in Figures 6B and 7, the first transverse wave and the second transverse wave of the first undulating surface section 210 and the first transverse wave and the second transverse wave of the second undulating surface section 220 have the same amplitude and frequency. In other words, the amplitude and frequency of the transverse waves on both the first undulating surface section 210 and the second undulating surface section 220 are the same.

For the heat exchanger surface 100 illustrated in Figure 7, the phase of the transverse wave on the first edge 212 of the first undulating surface section 210 is the same as the phase of the transverse wave on the second edge 224 of the second undulating surface section 220. As a result, the wave form of the transverse wave on edge 212 of the first undulating surface section 210 proximate to the second undulating surface section 220 is that same as the wave form of the transverse wave on edge 224 of the second undulating surface section 220 proximate to the first undulating surface section 210. Similarly, the phase of the transverse wave on the second edge 214 of the first undulating surface section 210 is the same as the phase of the transverse wave on the first edge 222 of the second undulating surface section 220, but this phase is different to the phase of the transverse wave on the first edge 212 of the first undulating surface section 210 and the transverse wave on the second edge 224 of the second undulating surface section 220. As a result, the peaks 216 formed by the first and second transverse waves on the first undulating surface section 210 occur at the same position along the flow direction (the predetermined direction Z) as the peaks 226 formed by the first and second transverse waves on the second undulating surface section 210, but the peaks at edges of the respective first and second undulating surface sections 210, 220 occur at different positions along the flow direction (the predetermined direction Z).

in contrast, for the heat exchanger surface 100 illustrated in Figure 6B, the phase of the transverse wave on the first edge 212 of the first undulating surface section 210 is the different to the phase of the transverse wave both the first edge 222 and the second edge 224 of the second undulating surface section 220. As a result, the wave form of the transverse wave on edge 212 of the first undulating surface section 210 proximate to the second undulating surface section 220 is different to the wave form of the transverse wave on edge 224 of the second undulating surface section 220 proximate to the first undulating surface section 210. Similarly, the phase of the transverse wave on the second edge 214 of the first undulating surface section 210 is different to the phase of the transverse wave on the first edge 222 of the second undulating surface section 220, and this phase is different to the phase of the transverse wave on the first edge 212 of the first undulating surface section 210. As a result, the peaks 216 formed by the first and second transverse waves on the first undulating surface section 210 occur at different positions along the flow direction (the predetermined direction Z) compared to the peaks 226 formed by the first and second transverse waves on the second undulating surface section 210, and the peaks at the edges of the respective first and second undulating surface sections 210, 220 occur at different positions along the flow direction (the predetermined direction Z).

in the heat exchanger surface 100 illustrated in Figures 6B and 7, the peaks on the outer edges of the first and second undulating surface sections 210, 220 occur before the peaks on the inner edges (i.e. closest to the mid-span) along the flow direction (the predetermined direction Z). In other words, the peaks on the first edge 212 of the first undulating surface section 210 and the second edge 224 of the second undulating surface section 220 occur downstream or otherwise further along the predetermined direction than the peaks on the second edge 214 of the first undulating surface section 210 and the first edge 222 of the second undulating surface section 220. This can be achieved by changing the first phase (the phase of the transverse wave on the first edge 212 of the first undulating surface section 210 and the transverse wave on the second edge 224 of the second undulating surface section 220) and the second phase (the phase of the transverse wave on the second edge 214 of the first undulating surface section 210 and the transverse wave on the first edge 222 of the second undulating surface section 220) in order to provide a peak on the first edge of the first undulating surface section that is located further along the direction of travel corresponding to the predetermined direction than the corresponding peak on the second edge of the first undulating surface section.

On the heat exchanger surface 100 illustrated in Figures 6B and 7, the first and second undulating surface sections 210, 220 have substantially the same width across the heat exchanger surface 100 (i.e. in the X direction, perpendicular to the flow direction in the predetermined direction Z). Equally, the second and third flat surface sections 320, 330 have substantially the same width across the heat exchanger surface 100. This results in the heat exchanger surface 100 being symmetrical about the flow direction (the predetermined direction Z), with the axis of symmetry corresponding to the mid-span of the heat exchanger surface 100, which is located in the middle of the first flat surface section 310 and equidistance between the first side wall 110 and the second side wall 120 of the fluid flow channel 6. On the heat exchanger surface 100 illustrated in Figures 6B and 7, the first flat surface section 310 is wider than each of the second and third flat surface sections 320, 330 across the heat exchanger surface 100 (i.e. in the X direction, perpendicular to the flow direction in the predetermined direction Z), but this is not essential and each of the first, second and third flat surface sections 320, 330 can have substantially the same width across the heat exchanger surface 100.

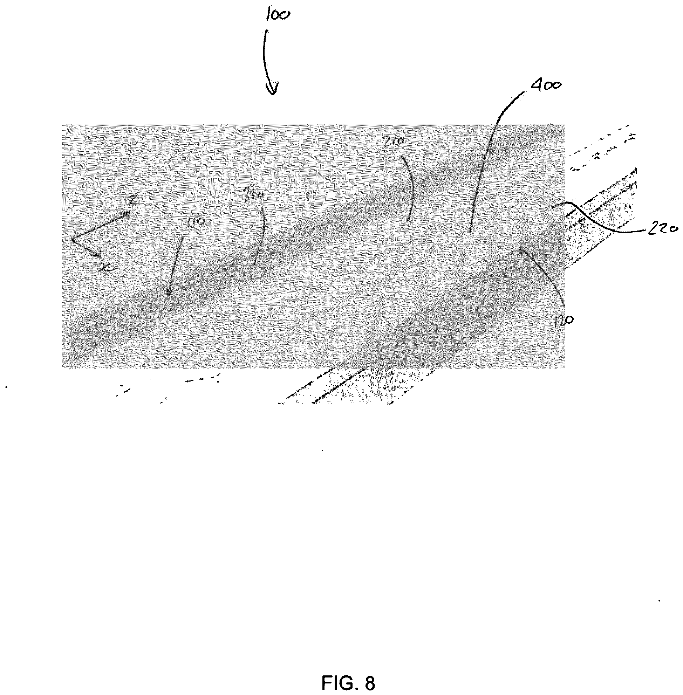

Figure 8 shows an example of a heat exchanger surface 100 that has a void between the undulating surface sections. The heat exchanger surface 100 has a first undulating surface section 210 and a second undulating surface section 220. The first and second undulating surface sections 210, 220 have the same properties as described above with reference to Figures 6B and 7, but instead of a flat surface section between the first undulating surface section 210 and the second undulating surface section 220, a void 400 is provided between the first undulating surface section 210 and the second undulating surface section 220. In other words, there is no material between the first edge 212 of the first undulating surface section 210 and the second edge 224 of the second undulating surface section 220 such that fluid can flow through the void 400 to pass across the heat exchanger surface 100. Although the void 400 is illustrated in Figure 8 as extending the entire length of the first edge 212 of the first undulating surface section 210 and the second edge 224 of the second undulating surface section 220, the void 400 may not extend this far and may only extend for a portion of this distance. In this case, multiple voids may be provided along the along the flow direction (the predetermined direction Z) and a flat surface profile section 310 provided between the first undulating surface section 210 and the second undulating surface section 220 that contains the voids.

Although not illustrated in Figure 8, it will be appreciated that a heat exchanger surface 100 that has a void between the undulating surface sections can also have a flat surface section 320, 330 between one or more of the first undulating surface section 210 and the first side wall 110 of the fluid flow channel 6 and the second undulating surface section 220 and the second side wall 120 of the fluid flow channel 6.

While the above example show cases where the undulating surface is in the secondary walls 10 of the heat exchanging channels (which divide different portions of the hot channels or different portions of the cold channels respectively), it is also possible to form the primary walls 8 which divide a hot channel from a cold channel with such an undulating surface section.

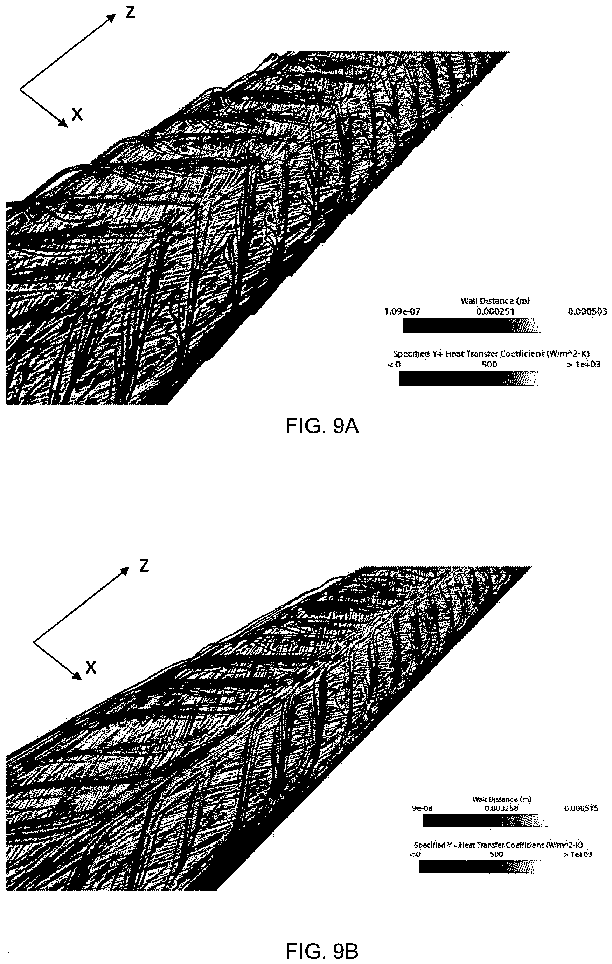

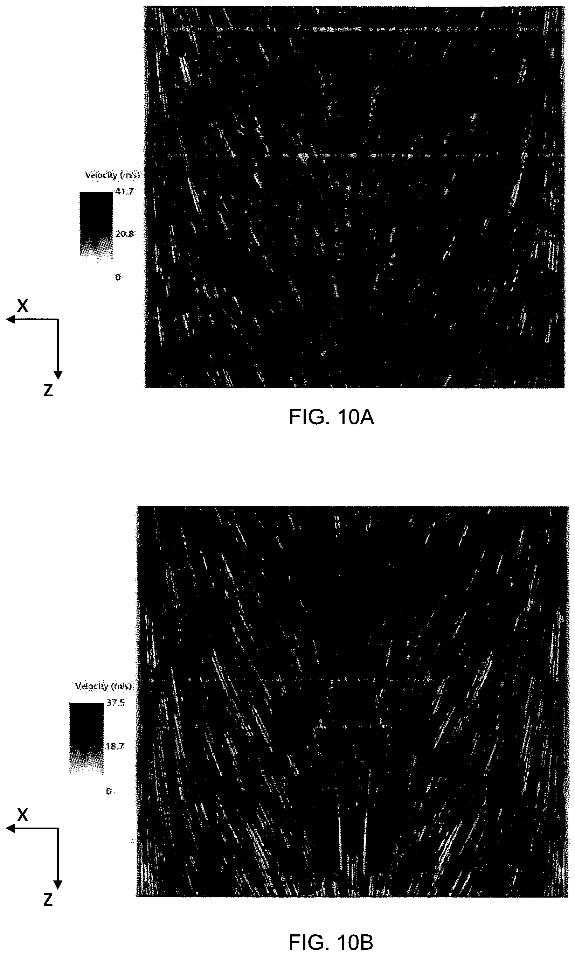

Figures 9 and 10 show heat transfer coefficient and velocity streamline diagrams, respectively, obtained by a computational fluid dynamics (CFD) simulation of fluid flow through a channel having a heat exchanging surface with an undulating surface section. The heat exchanging surface illustrated in Figures 9B and 10B correspond directly to the heat exchanging surface 100 illustrated in Figure 7, whilst the heat exchanging surface illustrated in Figures 9B and 10B correspond to the heat exchanging surface 100 illustrated in Figure 7 without each of the flat surface sections 310, 320, 330. In other words, the heat exchanging surface illustrated in Figures 9B and 10B comprises only a first and second undulating surface section, where the first undulating surface section extends from the first side wall to the mid-span, and the second undulating surface section extends from the second side wall to the mid-span. As can be seen in the Figure 10, the presence of the flat surface sections increases the velocity of the air flow along the heat exchanger surface in the locations where the flat surface sections are present (the mid-span and each of the side walls). This reduces the pressure drop along the fluid flow channels for the same mass flow. Although it can be seen from Figure 9 that the overall heat transfer is slightly reduced by the presence of the flat surface sections, since the use of the heat exchanging surface 100 illustrated in Figure 7 results in a reduced pressure drop, the distance between heat exchanging surfaces 100 on either side of the fluid flow channel 6 can be reduced in order to recoup the lost heat transfer, thereby resulting in a reduced volume of heat exchanger for the same heat transfer. Alternatively, the volume of the heat exchanger can be kept the same, thereby resulting in resulting in a reduction in pressure loss across a heat exchanger of a given volume.

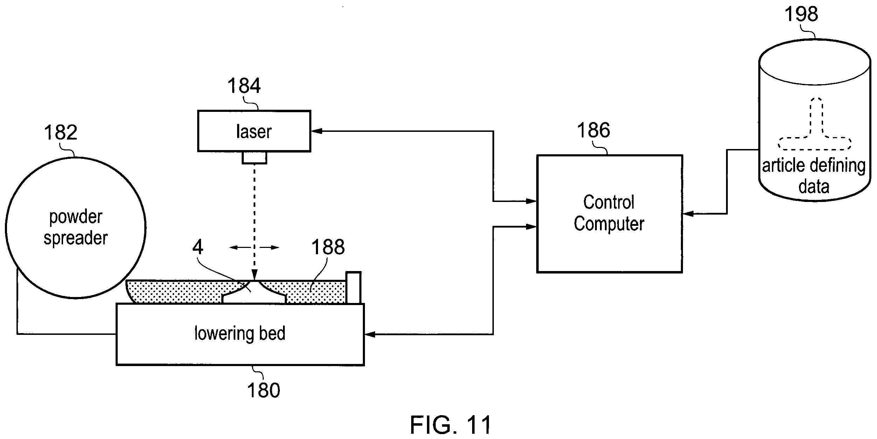

Figure 11 schematically illustrates an example of additive manufacture. In this example, laser fused metal powder 188 is used to form an article 4 such as the heat exchanger described above. The article 4 is formed layer-by-layer upon a lowering powder bed 180 on top of which thin layers of metal power to be fused are spread by a powder spreader 182 prior to being melted (fused) via a scanning laser beam provided from a laser 184. The scanning of the laser beam via the laser 184, and the lowering of the bed 180, are computer controlled by a control computer 186. The control computer 186 is in turn controlled by a computer program (e.g. computer data defining the article 4 to be manufactured). This article defining data is stored upon a computer readable non-transitory medium 198. Figure 10 illustrates one example of a machine which may be used to perform additive manufacture. Various other machines and additive manufacturing processes are also suitable for use in accordance with the present techniques, whereby a heat exchanger is manufactured with channels including a heat exchange surface with an undulating section as discussed above. For the specific design shown in Figure 4, the build direction for additive manufacture in one example is illustrated by the arrow on the right hand side. By building the manifold portion starting with the layer closest to the entrance/exit of the heat exchanger core, it is possible to build the rest of the manifold portion without an upper layer needing to extend beyond a lower layer by an angle of more than 45 degrees from the vertical, and there is greater support for upper layers by lower layers, to make it more practical to make the component by additive manufacture.

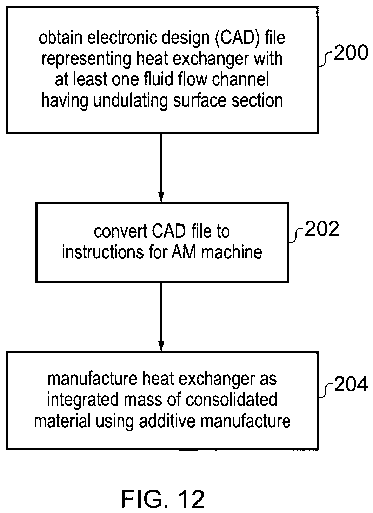

Figure 12 shows a method for manufacturing a heat exchanger. At step 200 a computer automated design (CAD) file is obtained. The CAD file provides a data structure which represents the design of a heat exchanger comprising fluid flow channels including a heat exchange surface with an undulating surface section as discussed above. For example, obtaining the CAD file at step 200 may comprise a designer generating a three-dimensional (3D) model of the heat exchanger from scratch, or could comprise reading an existing design from a recording medium or obtaining the CAD file via a network. The design file may represent the 3D geometry to be manufactured.

At step 202 the CAD file is converted to instructions for supplying to an additive manufacturing machine. The instructions control the additive manufacturing machine to deposit or form respective layers of material, which are built up layer by layer to form the overall heat exchanger. For example, the 3D design represented by the CAD file may be sliced into layers each providing a two-dimensional representation of the material to be formed in the corresponding layer.

At step 204 the converted instructions are supplied to an additive manufacturing machine which manufactures the heat exchanger as an integrated mass of consolidated material using additive manufacture. The heat exchanger can be made from various materials, e.g. metals or alloys, such as titanium or stainless steel, or a polymer for example. Various forms of additive manufacturing can be used, but in one example the additive manufacture uses selective laser melting.

Although illustrative embodiments of the invention have been described in detail herein with reference to the accompanying drawings, it is to be understood that the invention is not limited to those precise embodiments, and that various changes and modifications can be effected therein by one skilled in the art without departing from the scope of the invention as defined by the appended claims.

## Claims

1. A heat exchanger comprising:
a plurality of fluid flow channels;
at least one of the fluid flow channels comprising at least one heat exchanging surface comprising at least one undulating surface section extending along at least part of a length of the channel and at least one flat surface section;
wherein for each undulating surface section:
along a first edge of the undulating surface section aligned with a predetermined direction, a profile of the heat exchanging surface varies according to a first transverse wave with a direction of travel corresponding to the predetermined direction;
along a second edge of the undulating surface section aligned with the predetermined direction, a profile of the heat exchanging surface varies according to a second transverse wave with a direction of travel corresponding to the predetermined direction; and
wherein each flat surface section is flat along a direction of travel corresponding to the predetermined direction, and where one of the flat surface sections is lying either:
between one of the undulating surface sections and a side wall of the at least one fluid flow channel; or
between a first undulating surface section and a second undulating surface section of the at least one heat exchanging surface.

2. The heat exchanger according to claim 1, where the at least one heat exchanger surface comprises a secondary surface of the heat exchanger.

3. The heat exchanger according to any one of the preceding claims, wherein the at least one heat exchanging surface comprises the first undulating surface section and the second undulating surface section, with the first edge of the first undulating surface section adjacent to the second edge of the second undulating surface section.

4. The heat exchanger according to claim 3, wherein a first flat surface section is lying between the first undulating surface section and the second undulating surface section and a second flat surface section is lying between either the first undulating surface section and a first side wall of the at least one fluid flow channel or the second undulating surface section and a second side wall of the at least one fluid flow channel, wherein the second side wall is opposite the first side wall.

5. The heat exchanger according to claim 4, wherein the at least one heat exchanging surface further comprises a third flat surface section, wherein the second flat surface section is lying between the first undulating surface section and the first side wall of the at least one fluid flow channel, and the third flat surface section is lying between the second undulating surface section and the second side wall of the at least one fluid flow channel.

6. The heat exchanger according to claim 3, wherein a first flat surface section is lying between either the first undulating surface section and a first side wall of the at least one fluid flow channel or the second undulating surface section and a second side wall of the at least one fluid flow channel, wherein the second side wall is opposite the first side wall, and further comprising a void of material between the first undulating surface section and the second undulating surface section.

7. The heat exchanger according to claim 6, wherein the void of material extends along an entire length of the first edge of the first undulating surface section and the second edge of the second undulating surface section.

8. The heat exchanger according to claim 6 or claim 7, wherein the first flat surface section is lying between the first undulating surface section and a first side wall of the at least one fluid flow channel and a second flat surface section is lying between the second undulating surface section and a second side wall of the at least one fluid flow channel.

9. The heat exchanger according to any one of claims 3 to 8, wherein the first transverse wave and the second transverse wave of the first undulating surface section and the second undulating surface section have the same amplitude and frequency.

10. The heat exchanger according to claim 9, wherein the first transverse wave of the first undulating surface section and the second transverse wave of the second undulating surface section have a first phase and the second transverse wave of the first undulating surface section and the first transverse wave of the second undulating surface section have a second phase, wherein the first and second phase a different.

11. The heat exchanger according to claim 10, wherein the first phase and the second phase are such that a peak on the first edge of the first undulating surface section is located further along the direction of travel corresponding to the predetermined direction than the corresponding peak on the second edge of the first undulating surface section.

12. A system comprising:
a combustor to generate heat by combusting a fuel; and
a recuperator to recover heat from the exhaust gas output by the combustor;
wherein the recuperator comprises the heat exchanger according to any one of the preceding claims.

13. A method of manufacturing a heat exchanger comprising:
forming a plurality of fluid flow channels;
at least one of the fluid flow channels comprising at least one heat exchanging surface comprising at least one undulating surface section extending along at least part of a length of the channel and at least one flat surface section;
wherein for each undulating surface section:
along a first edge of the undulating surface section aligned with a predetermined direction, a profile of the heat exchanging surface varies according to a first transverse wave with a direction of travel corresponding to the predetermined direction;
along a second edge of the undulating surface section aligned with the predetermined direction, a profile of the heat exchanging surface varies according to a second transverse wave with a direction of travel corresponding to the predetermined direction; and
wherein each flat surface section is flat along a direction of travel corresponding to the predetermined direction, and where one of the flat surface sections is lying either:
between one of the undulating surface sections and a side wall of the at least one fluid flow channel; or
between a first undulating surface section and a second undulating surface section of the at least one heat exchanging surface.

14. A computer-readable data structure representing a design of a heat exchanger according to any one of claims 1 to 11.

15. A storage medium storing the data structure of claim 14.
